(19) Europäisches Patentamt / European Patent Office / Office européen des brevets

(11) **EP 3 505 957 B1**

(12) **FASCICULE DE BREVET EUROPEEN**

(45) Date de publication et mention
de la délivrance du brevet:
**05.08.2020 Bulletin 2020/32**

(51) Int Cl.:
**G01S 13/72** *(2006.01)* **G01S 7/02** *(2006.01)*
**G01S 7/42** *(2006.01)* G01S 5/02 *(2010.01)*
**G01S 13/42** *(2006.01)*

(21) Numéro de dépôt: **18213873.5**

(22) Date de dépôt: **19.12.2018**

(54) **PROCEDE DE TRAITEMENT POUR LA DETECTION, LA CARACTERISATION ET LE SUIVI MULTI-CIBLES ET DISPOSITIF ASSOCIE**

VERARBEITUNGSVERFAHREN ZUR DETEKTION, CHARAKTERISIERUNG UND NACHVERFOLGUNG VON MEHREREN ZIELEN, UND ENTSPRECHENDE VORRICHTUNG

TREATMENT METHOD FOR MULTI-TARGET DETECTION, CHARACTERISATION AND TRACKING AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2017 FR 1701382**

(43) Date de publication de la demande:
**03.07.2019 Bulletin 2019/27**

(73) Titulaire: **Avantix**
**13794 Aix-en-Provence Cedex 3 (FR)**

(72) Inventeurs:
• **BOURGOIN, Hugo**
**13100 Aix en Provence (FR)**
• **COURTAT, Thomas**
**75015 Paris (FR)**

(74) Mandataire: **Cabinet Camus Lebkiri**
**25 rue de Maubeuge**
**75009 Paris (FR)**

(56) Documents cités:
**US-A- 5 400 264**

• **MUSICKI D ET AL: "Multi-target tracking in clutter without measurement assignment", 43RD IEEE CONFERENCE ON DECISION AND CONTROL; DECEMBER 14-17, 2004; ATLANTIS, PARADISE ISLAND, BAHAMAS, IEEE, PISCATAWAY, NJ, USA, vol. 1, 14 décembre 2004 (2004-12-14), pages 716-721Vol.1, XP010794548, ISBN: 978-0-7803-8682-2**
• **J. Chris Mcmillan ET AL: "DATA ASSOCIATION ALGORITHMS 0I FOR MULTIPLE TARGET TRACKING", DEFENCE RESEARCH ESTABLISHMENT oITAWA, 31 juillet 1990 (1990-07-31), XP055505966, Extrait de l'Internet: URL:http://www.dtic.mil/dtic/tr/fulltext/u 2/a231688.pdf [extrait le 2018-09-10]**

## Description

### DOMAINE TECHNIQUE DE L'INVENTION

Le domaine technique de l'invention est celui de la détection, de la caractérisation et du suivi multicibles.

La présente invention concerne en particulier un procédé de traitement de mesures. La présente invention concerne également un dispositif pour la mise en œuvre d'un tel procédé.

### ARRIERE-PLAN TECHNOLOGIQUE DE L'INVENTION

Les algorithmes classiques de détection, de caractérisation et de suivi multi-cibles nécessitent des données fournies par l'utilisateur pour être fonctionnelles. Par exemple, un algorithme de suivi multi-cibles classique doit connaître le nombre de cibles à suivre.

Le document "Multi-target tracking in clutter without measurement assignment" (14 décembre 2004) par D. Musicki et al. représente l'art de la technique.

Il existe donc un besoin de détecter, caractériser et suivre plusieurs cibles en même temps sans qu'un utilisateur n'ait besoin de fournir d'informations a priori sur les cibles à suivre.

### RESUME DE L'INVENTION

L'invention offre une solution aux problèmes évoqués précédemment, en permettant de détecter, caractériser et suivre plusieurs cibles dans un environnement à partir de mesures de cet environnement sans qu'un utilisateur ne fournisse de données d'initialisation ou données de mise à jour.

Un premier aspect de l'invention concerne un procédé de traitement de mesures obtenues par un système antennaire à un indice de temps t donné, comportant les différentes étapes suivantes, réalisées par une unité de calcul d'un dispositif :

- Au sein d'une première liste de clusters, un cluster se définissant comme un ensemble de mesures comportant des caractéristiques temporelles, des caractéristiques spatiales et des caractéristiques de signal, un cluster étant créé à partir d'une première mesure et évoluant au fur et à mesure que de nouvelles mesures sont produites, prédire, à l'indice de temps t, les caractéristiques spatiales de chaque cluster contenu dans la première liste de clusters en fonction des caractéristiques spatiales du cluster à sa dernière mise à jour pour former une deuxième liste de clusters ;

- Pour chaque mesure :

  ○ Former une troisième liste de clusters comprise dans la deuxième liste, chaque cluster comportant les caractéristiques spatiales prédites précédemment ;

  ○ Calculer un score de vraisemblance entre la mesure et chaque cluster de la troisième liste de clusters, le score de vraisemblance étant calculé à partir de deux facteurs, un premier facteur étant une distance entre la mesure et au moins une caractéristique spatiale du cluster et le deuxième facteur étant le résultat d'un traitement statistique des caractéristiques du cluster ;

  ○ Sélectionner le score de vraisemblance maximal ;

  ○ Comparer le score de vraisemblance maximal avec un seuil prédéterminé :

    ■ Si le score de vraisemblance maximal est au-dessus du seuil, mettre à jour les caractéristiques de chaque cluster de la troisième liste de clusters pour former une quatrième liste de clusters intégrant les informations de la mesure ;

    ■ Sinon, créer un nouveau cluster à partir de la mesure et placer le nouveau cluster dans la deuxième liste de clusters.

Grâce à l'invention, les clusters permettent d'assurer le regroupement des mesures prises au cours du temps et ainsi de réaliser le suivi des cibles ayant généré ces mesures. En effet, un cluster est un ensemble de mesures, créé à partir d'une première mesure et qui évolue au fur et à mesure que de nouvelles mesures sont produites. Le procédé permet donc d'assurer le suivi d'une pluralité de cibles, chaque cible correspondant à un cluster à un instant donné, sans nécessiter d'informations au préalable.

On entend par mesures obtenues par un système antennaire à un indice de temps t donné, des mesures obtenues à une date Dt (désignée indifféremment par instant t dans la suite de la description), les mesures obtenues précédemment (i.e. à l'indice de temps t-1) étant obtenues à une date $D_{t-1}$. On notera que les écarts séparant deux dates consécutives $\Delta Dt = D_t - D_{t-1}$ ne sont pas nécessairement toujours les mêmes.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles.

Avantageusement, chaque mesure présente des caractéristiques temporelles, des caractéristiques spatiales et de caractéristiques de signal qui peuvent être choisies parmi au moins le groupe formé des caractéristiques suivantes :

- Pour les caractéristiques temporelles : une date ;
- Pour les caractéristiques spatiales : une position, une incertitude de position, et éventuellement une direction d'arrivée et un angle d'incertitude associé à la direction d'arrivée ;
- Pour les caractéristiques de signal : une fréquence centrale, une largeur de bande, une puissance, un rapport signal à bruit, un type de modulation, une polarisation, une durée d'émission et trois probabilités de mode de transmission correspondant à trois modes de transmission, bursté, continu et à évasion de fréquence.

Avantageusement, les caractéristiques d'un cluster peuvent être choisies parmi au moins le groupe formé des caractéristiques suivantes :

- Pour les caractéristiques temporelles : une date de première détection, une date de dernière mise à jour et un nombre de mesures ;
- Pour les caractéristiques spatiales : une position, une incertitude de position et éventuellement une direction d'arrivée ;
- Pour les caractéristiques de signal : une fréquence centrale, une largeur de bande, une puissance, un rapport signal à bruit, une durée d'émission, un type de modulation, une polarisation et trois probabilités de mode de transmission correspondant à trois modes de transmission, bursté, continu et à évasion de fréquence.

Avantageusement, le procédé selon un premier aspect de l'invention comporte une étape de formation de la première liste de clusters avant l'étape de prédiction pour ne garder que chaque cluster d'une liste de clusters dont la position est dans une zone géographique proche définie à partir des positions des mesures ou de la connaissance de la position courant des antennes du système antennaire.
Ainsi, seuls les clusters dont la position est proche de la position des mesures sont conservés ce qui permet de diminuer le temps de calcul en ne traitant que les clusters les plus proches spatialement des mesures.

Avantageusement, l'étape de prédiction des caractéristiques spatiales de chaque cluster de la première liste de clusters à l'indice de temps t est réalisée conformément à un schéma de prédiction de Kalman à partir des informations temporelles et spatiales du cluster.
Ainsi, la prédiction des caractéristiques spatiales à un instant t dépend de la prédiction des caractéristiques spatiales à l'instant t-1 ce qui permet de faire évoluer le cluster en fonction de son état précédent.

Avantageusement, l'étape de formation de la troisième liste de clusters comporte une première étape de filtrage pour ne garder que chaque cluster de la deuxième liste de clusters répondant à des conditions de filtrage de signal basées sur les caractéristiques de signal de la mesure et les caractéristiques de signal du cluster. Ainsi, seuls les clusters dont les caractéristiques de signal sont proches des caractéristiques de signal de la mesure sont conservés ce qui permet de diminuer le temps de calcul en ne traitant que les clusters les plus similaires à la mesure du point de vue du signal.

Avantageusement, l'étape de formation de la troisième liste de clusters comporte une deuxième étape de filtrage pour ne garder que chaque cluster de la deuxième liste de clusters répondant à une condition de filtrage spatiale basée sur les caractéristiques spatiales de la mesure et les caractéristiques spatiales du cluster. Ainsi, seuls les clusters dont les caractéristiques spatiales sont proches des caractéristiques spatiales de la mesure sont conservés ce qui permet de diminuer le temps de calcul en ne traitant que les clusters les plus similaires à la mesure du point de vue spatial.

Avantageusement, pendant l'étape de mise à jour, les caractéristiques de signal et les caractéristiques spatiales de chaque cluster de la troisième liste de clusters sont mises à jour à partir du score de vraisemblance normalisé du cluster associé à la mesure et au cluster. Ainsi, la mesure fait évoluer chaque cluster en fonction du score de vraisemblance associé au cluster, c'est-à-dire que plus le score de vraisemblance est important, plus la mesure a de l'influence sur l'évolution des caractéristiques du cluster.

Un autre aspect de l'invention concerne un dispositif permettant la mise en œuvre du procédé selon un premier aspect de l'invention comportant une unité de calcul configurée pour réaliser les étapes du procédé.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 montre une représentation schématique du procédé selon un premier aspect de l'invention selon un premier mode de réalisation.
- La figure 2 montre une représentation schématique d'un cluster.
- La figure 3 montre une représentation schématique d'une mesure.
- La figure 4 montre l'étape de mise à jour des caractéristiques spatiales des clusters.

## DESCRIPTION DETAILLEE D'AU MOINS UN MODE DE REALISATION DE L'INVENTION

Sauf précision contraire, un même élément apparaissant sur des figures différentes présente une référence unique.

Un premier aspect de l'invention concerne un procédé 100 de traitement de mesures 1021 obtenues à partir d'acquisitions réalisées par un système antennaire dans un environnement dans lequel on veut détecter, caractériser et suivre des cibles. Dans la suite de la présente demande, on désignera par cible, un émetteur dont on veut connaître un certain nombre de caractéristiques, comme par exemple la position, la vitesse ou encore la fréquence d'émission. Préférentiellement, les cibles sont mobiles, c'est-à-dire que les cibles ont une vitesse non nulle mais elles peuvent rester immobiles pendant un certain intervalle de temps. On entend par système antennaire un dispositif comportant un élément antennaire capable de capter des mesures de son environnement et d'inférer des positions. Le système antennaire est préférentiellement aéroporté et mobile.

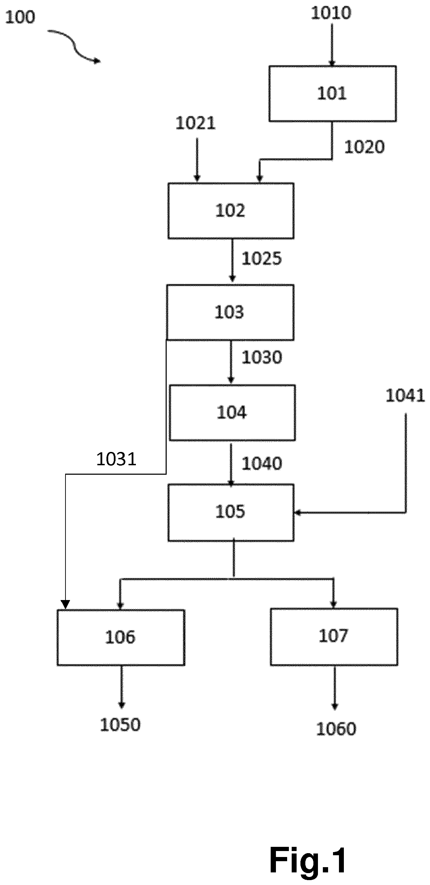

Le procédé 100 selon un premier aspect de l'invention comporte plusieurs étapes dont l'enchaînement est représenté à la figure 1. Ces étapes sont mises en œuvre par le dispositif selon un deuxième aspect de l'invention comportant une unité de calcul configurée pour réaliser les étapes 101 à 107 du procédé 100.

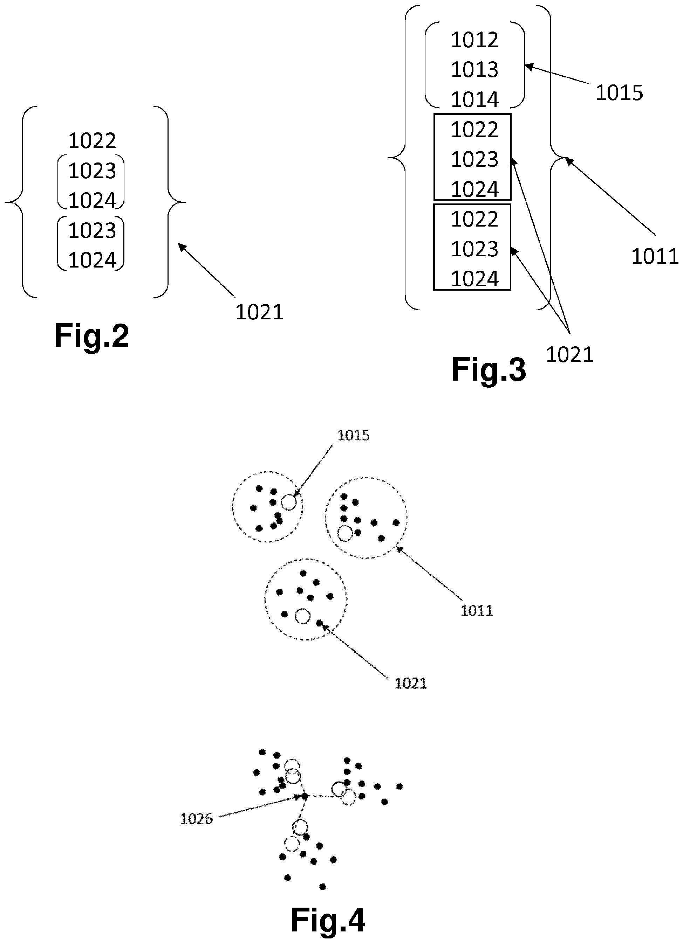

A un instant t, un ensemble de mesures est produit. On désigne par ensemble de mesures 1021 une liste datée par une caractéristique temporelle 1022 de mesures comportant des caractéristiques spatiales 1023 et des caractéristiques signal 1024. La date de l'ensemble de mesures est vue comme une caractéristique supplémentaire dite temporelle 1022. Par exemple, l'ensemble de mesures 1021 de la figure 2 comporte une caractéristique temporelle 1022 valant pour deux mesures (ou plus généralement une pluralité de mesures) comportant des caractéristiques spatiales 1023 et signal 1024. Préférentiellement, les caractéristiques temporelles 1022 sont des dates de mesure. Préférentiellement, les caractéristiques spatiales 1023 sont par exemple une position, une incertitude de position, une direction d'arrivée et un angle d'incertitude associé à la direction d'arrivée. Préférentiellement, les caractéristiques de signal 1024 sont par exemple une fréquence centrale, une largeur de bande, une puissance, un rapport signal à bruit, une durée d'émission, un type de modulation, une polarisation et trois probabilités de mode de transmission correspondant à trois modes de transmission : bursté, continu et à évasion de fréquence. On entend par mode de transmission bursté, la transmission d'un signal de puissance nulle à part à sur certains intervalles de temps courts essaimés dans le temps. On entend par mode de transmission continu, la transmission d'un signal continu. On entend par mode de transmission à évasion de fréquence, la transmission d'un signal qui utilise alternativement plusieurs sous-canaux répartis dans une bande de fréquences selon une séquence donnée, par exemple pseudo-aléatoire.

On dispose d'une liste de clusters générée à l'instant t-1. La liste de clusters peut être vide ou comporter un ou plusieurs clusters 1011. On désigne par cluster 1011 un ensemble de caractéristiques 1015 pouvant être de trois types : des caractéristiques temporelles 1012, des caractéristiques spatiales 1013 et des caractéristiques de signal 1014 comme illustrées à la figure 3. Par exemple, le cluster 1011 de la figure 3 comporte des caractéristiques temporelles 1012, des caractéristiques spatiales 1013 et des caractéristiques de signal 1014 et regroupe l'historique d'une pluralité de mesures 1021 (ici deux mesures 1021) à partir desquelles sont mises à jour ses caractéristiques 1015. Préférentiellement, les caractéristiques temporelles 1022 sont par exemple une date de création, une date de dernière mise à jour et un nombre de mesures. Préférentiellement, les caractéristiques spatiales 1023 sont par exemple une position, une incertitude de position et éventuellement une direction d'arrivée. Préférentiellement, les caractéristiques de signal 1024 sont par exemple une fréquence centrale, une largeur de bande, une puissance, un rapport signal à bruit, une durée d'émission, un type de modulation, une polarisation et trois probabilités de mode de transmission correspondant à trois modes de transmission : bursté, continu et à évasion de fréquence. Comme évoqué plus haut, un cluster 1011 est également un regroupement de mesures 1021 comme illustré à la figure 4 dans laquelle chaque cluster 1011 englobe une pluralité de mesures 1021 à partir desquelles sont mises à jour ses caractéristiques 1015. Sur la figure 4 est illustrée la mise à jour de la position 1015 de trois clusters 1011 par l'ajout d'une nouvelle mesure 1026. Selon un premier mode de réalisation, la liste de clusters générée à l'instant t-1 est une première liste de clusters 1010.

Selon un deuxième mode de réalisation, la première liste de clusters 1010 est une sous-liste de la liste de clusters générée à l'instant t-1. Un filtrage est réalisé pour supprimer chaque cluster 1011 dont la position 1015 n'est pas dans une zone géographique proche des positions des mesures 1021. Il est possible par exemple de calculer le barycentre des positions des mesures 1021. La zone géographique est alors par exemple un cercle ayant pour centre le barycentre et ayant un diamètre par exemple compris entre 200 et 300 km. La première liste de clusters 1010 est alors formée des clusters 1011 de la liste de clusters générée à l'instant t-1 n'ayant pas été supprimés par le filtrage.

Il est également possible de coupler le filtrage précédent avec un filtrage temporel qui supprime chaque cluster 1011 de la liste de clusters générée à l'instant t-1 dont la date de dernière mise à jour est trop éloignée de la date courante, ce qui signifie que la cible qui a généré les mesures 1021 regroupées dans le cluster 1011 était issue d'une erreur ou s'est éteinte depuis.

Une fois la première liste de clusters 1010 obtenue, l'étape 101 de prédiction des caractéristiques spatiales 1013 de chaque cluster 1011 de la première liste de clusters 1010 est réalisée. En effet, la première liste de clusters 1010 comporte des clusters 1011 dont les caractéristiques spatiales 1013 ont été évaluées à l'instant t-1, c'est-à-dire que, par exemple, la position 1015 de chaque cluster 1011 est celle obtenue à l'instant t-1. Comme les cibles à suivre sont mobiles, les caractéristiques spatiales 1013 des clusters 1011 varient dans le temps. Cette étape 101 de prédiction permet de prédire les caractéristiques spatiales 1013 d'un cluster 1011 de la première liste de clusters 1010, comme par exemple sa position 1015, à l'instant t à partir des caractéristiques spatiales 1013 du même cluster 1011 à l'instant t-1. Préférentiellement, cette étape 101 de prédiction est réalisée selon une prédiction de Kalman intégrant la position estimée en t-1, les incertitudes attachées à cette estimation et la différence entre les dates t et t-1. Les clusters 1011 de la première liste de clusters 1010 mis à jour forment une deuxième liste de clusters 1020.

Les étapes 102 à 107 suivantes sont réalisées pour chaque mesure 1021 obtenue à l'instant t.

Selon un premier mode de réalisation, une troisième liste de clusters 1025 est formée à partir des clusters 1011 de la deuxième liste de clusters 1020 dont les caractéristiques spatiales 1013 ont été prédites à l'étape 101 précédente.

Selon un deuxième mode de réalisation, l'étape 102 de formation de la troisième liste de clusters 1025 comporte une première étape de filtrage pendant laquelle les clusters 1011 de la deuxième liste de clusters 1020 répondant à des conditions de filtrage de signal sont ajoutés à la troisième liste de clusters 1025 initialement vide. Les conditions de filtrage de signal sont basées sur les caractéristiques de signal 1014 de chaque cluster 1011 de la deuxième liste de clusters 1020 et sur les caractéristiques de signal 1024 de la mesure 1021 en cours de traitement. Par exemple, les conditions de filtrage de signal pour un cluster 1011 sont choisies parmi au moins le groupe formé des conditions suivantes :

- Un mode de transmission du cluster 1011 est identique à un mode de transmission de la mesure 1021, le mode de transmission du cluster 1011 étant le mode transmission dont la probabilité est la plus élevée parmi les trois probabilités de mode de transmission du cluster 1011 et le mode de transmission de la mesure 1021 étant le mode transmission dont la probabilité est la plus élevée parmi les trois probabilités de mode de transmission de la mesure 1021. Par exemple, si la probabilité la plus élevée parmi les trois probabilités de mode de transmission du cluster 1011 est la probabilité que le mode de transmission soit bursté, le mode de transmission est considéré bursté pour le cluster 1011 et si la probabilité la plus élevée parmi les trois probabilités de mode de transmission de la mesure 1021 est la probabilité que le mode de transmission soit à évasion de fréquence, le mode de transmission est considéré à évasion de fréquence, le mode de transmission du cluster 1011 n'est alors pas identique au mode de transmission de la mesure 1021 ;
- La différence entre la durée d'émission de la mesure 1021 et la durée d'émission du cluster 1011 est inférieure à un multiple d'une résolution temporelle associée à l'acquisition de la mesure 1021 ;

- Si le mode de transmission de la mesure 1021 est à évasion de fréquence, la fréquence de la mesure 1021 et la fréquence du cluster 1011 sont comprises dans une même bande de fréquence.
- La différence entre la fréquence de la mesure 1021 et la fréquence du cluster 1011 est inférieure à un multiple d'une résolution fréquentielle associée à l'acquisition de la mesure 1021.

A l'issue de l'étape 102 de formation de la troisième liste de clusters 1025, seuls les clusters 1011 de la deuxième liste de clusters 1020 répondant aux conditions de filtrage de signal choisies sont placés dans la troisième liste de clusters 1025.

Selon un troisième mode de réalisation, les clusters 1011 sélectionnés à l'issue de la première étape de filtrage ne sont pas directement placés dans la troisième liste de clusters 1025 mais dans une liste intermédiaire de clusters initialement vide. L'étape 102 de formation de la troisième liste de clusters 1025 comporte alors une deuxième étape de filtrage pendant laquelle les clusters 1011 de la liste intermédiaire de clusters répondant à une condition de filtrage spatiale sont ajoutés à la troisième liste de clusters 1025 initialement vide. La condition de filtrage spatiale est basée sur les caractéristiques spatiales 1013 de chaque cluster 1011 de la liste intermédiaire de clusters et sur les caractéristiques spatiales 1023 de la mesure 1021 en cours de traitement. Préférentiellement, la condition de filtrage spatiale est que l'angle entre la direction d'arrivée de la mesure 1021 et la direction d'arrivée du cluster 1011 ait une valeur inférieure à $\frac{3}{2}$ fois l'angle d'incertitude associé à la direction d'arrivée de la mesure 1021 en cours de traitement.

A l'issue de l'étape 102 de formation de la troisième liste de clusters 1025, seuls les clusters 1011 de la liste intermédiaire de clusters répondant à la condition de filtrage spatiale choisie sont placés dans la troisième liste de clusters 1025.

Selon un quatrième mode de réalisation, l'étape 102 de formation de la troisième liste de clusters 1025 comporte uniquement la deuxième étape de filtrage qui forme la troisième liste de clusters 1025 à partir des clusters 1011 de la deuxième liste de clusters 1020 répondant à la condition de filtrage spatiale.

Une fois la troisième liste de clusters 1025 associée à la mesure 1021 en cours de traitement formée, l'étape 103 de calcul du score de vraisemblance est réalisée. Un score de vraisemblance 1030 est calculée entre la mesure 1021 et chaque cluster 1011 de la troisième liste de clusters 1025. Le nombre de scores de vraisemblance 1030 calculés est donc égal au cardinal de la troisième liste de clusters 1025. On entend par cardinal d'une liste, le nombre d'éléments de la liste.

Le score de vraisemblance 1030 entre la mesure 1021 et un cluster 1011 de la troisième liste de clusters 1025 est calculé à partir de deux facteurs.

Un premier facteur définit une distance entre la mesure 1021 et le cluster 1011. Préférentiellement, cette distance est basée sur les caractéristiques de signal 1024 de la mesure 1021 et les caractéristiques de signal 1014 du cluster 1011. Plus préférentiellement, la distance est calculée à partir de trois sous-facteurs, chaque sous-facteur étant lié à une unique caractéristique de signal 1024 de la mesure 1021. La distance s'exprime alors ainsi :

$$d(m, c_i) = sf_1 \times sf_2 \times sf_3$$

Avec $d(m,c_i)$ la distance entre la mesure m et le i-ème cluster 1011 de la troisième liste de clusters 1025, $sf_1$ un premier sous-facteur, $sf_2$ un deuxième sous-facteur et $sf_3$ un troisième sous-facteur.

Le premier sous-facteur dépend par exemple de la fréquence : si le cluster 1011 a un mode de transmission à évasion de fréquence, il vaut par exemple 1 et si le cluster 1011 a un mode de transmission continu, il vaut :

$$sf_1 = 1 - \frac{\Delta f}{\Delta f_{max}}$$

Avec $\Delta f_{max}$ une fonction des paramètres d'acquisition de la mesure 1021 et avec :

$$\Delta f = |f_m - f_{ci}|$$

Avec $f_m$ la fréquence de la mesure m 1021 et $f_{ci}$ la fréquence du i-ème cluster 1011 de la troisième liste de clusters 1025.

Le deuxième sous-facteur dépend par exemple de la largeur de bande : il vaut par exemple la largeur de bande de la mesure 1021.

Le troisième sous-facteur dépend par exemple de la durée d'émission : il vaut par exemple :

$$sf_3 = 1 - \Delta t$$

Avec :

$$\Delta t = \frac{|d_m - d_{ci}|}{d_{ci}}$$

Avec $d_m$ la durée d'émission de la mesure m 1021 et $d_{ci}$ la durée d'émission du i-ème cluster 1011 de la troisième liste de clusters 1025.

Finalement, le premier facteur $F_1$ s'exprime ainsi :

$$F_1(m, c_i) = \frac{1}{d(m, c_i)}$$

Le second facteur est le résultat d'un traitement statistique des caractéristiques du cluster 1011. Préférentiellement, le second facteur $F_2$ s'exprime ainsi :

$$F_2(m, c_i) = \frac{\frac{\exp(-s(m, c_i))}{n(m, c_i)}}{\sum_k \frac{\exp(-s(m, c_k))}{n(m, c_k)}}$$

Avec la somme sur tous les clusters 1011 de la troisième liste de clusters 1025 et :

$$s(m, c_i) = \frac{\exp(-dist(m, c_i))}{n(m, c_i)}$$

Avec $dist(m, c_i)$ définissant une distance entre la position de la mesure m 1021 et la position prédite à l'étape 101 de prédiction du i-ème cluster 1011 et $n(m, c_i)$ permettant la prise en compte des incertitudes de position.

Le score de vraisemblance S 1030 s'exprime ainsi :

$$S(m, c_i) = F_1(m, c_i) \times F_2(m, c_i)$$

Et finalement, le score de vraisemblance SN normalisé (étape 1031) s'exprime ainsi :

$$SN(m, c_i) = \frac{S(m, c_i)}{\sum_j S(m, c_j)}$$

Une fois que chaque score de vraisemblance 1030 associé à chaque cluster 1011 de la troisième liste de clusters 1025 a été calculé, l'étape 104 de sélection consiste à sélectionner le score de vraisemblance maximal 1040 parmi tous les scores de vraisemblance 1030.

Une fois le score de vraisemblance maximal 1040 sélectionné, l'étape 105 de comparaison consiste à comparer le score de vraisemblance maximal 1040 à un seuil 1041 prédéterminé. Si le score de vraisemblance maximal 1040 est au-dessus ou égal au seuil 1041, l'étape 106 de mise à jour des caractéristiques 1015 de chaque cluster 1011 de la troisième liste de clusters 1025 est réalisée. Sinon l'étape 107 de création d'un nouveau cluster 1060 est réalisée.

L'étape 106 de mise à jour des caractéristiques 1015 de chaque cluster 1011 de la troisième liste de clusters 1025 consiste à mettre à jour les caractéristiques spatiales 1013 et les caractéristiques de signal 1014 de chaque cluster 1011 à partir de son score de vraisemblance 1030, à mettre à jour la date de dernière mise à jour du cluster 1011 avec la date actuelle et à incrémenter le nombre de mesures du cluster 1011 de 1.

Préférentiellement, la mise à jour des caractéristiques spatiales 1013 de chaque cluster 1011 de la troisième liste de clusters 1025 est réalisée selon un schéma de correction de Kalman dont le gain est multiplié par le score de vraisemblance normalisé 1031 associé au cluster 1011 qui est en train d'être mis à jour. Cette mise à jour des caractéristiques spatiales 1014 est illustrée à la figure 4. Sur la figure 4, trois clusters 1011 sont représentés : chaque cluster 1011 regroupe une pluralité de mesures 1021 et possède une position 1015. L'ajout d'une nouvelle mesure 1026 entraîne la mise à jour de la position 1015 de chaque cluster 1011. Préférentiellement, toutes les caractéristiques de signal 1014 d'un cluster 1011 sont mises à jour à partir de son score de vraisemblance normalisé 1031. Par exemple, la fréquence du cluster 1011 mis à jour s'exprime ainsi :

$$f_{ci}(t) = f_{ci}(t-1) + SN(m, c_i) \times f_m$$

Avec $f_{ci}(t)$ la fréquence mise à jour du i-ème cluster 1011 de la troisième liste de clusters 1025, $f_{ci}(t-1)$ la fréquence avant mise à jour du i-ème cluster 1011 de la troisième liste de clusters 1025, $SN(m, c_i)$ le score de vraisemblance normalisé 1031 associé à la mesure m 1021 et au i-ème cluster 1011, $f_m$ la fréquence de la mesure m 1021 et N le nombre de mesures du i-ème cluster 1011.

Les clusters 1011 de la troisième liste de clusters 1025 mis à jour sont ajoutés à une quatrième liste de clusters 1050 initialement vide.

L'étape 107 de création d'un nouveau cluster 1060 consiste à donner comme valeurs aux caractéristiques spatiales 1013 et aux caractéristiques de signal 1014 du nouveau cluster 1060 respectivement les valeurs des caractéristiques spatiales 1023 et des caractéristiques de signal 1024 de la mesure 1021. Par exemple, la position 1015 du nouveau cluster 1060 prend la valeur de la position de la mesure 1021. Le nombre de mesures du cluster 1011 prend la valeur 1 et la date de dernière mise à jour est initialisée à 0. Les autres caractéristiques temporelles 1012 du nouveau cluster 1060 prennent les valeurs des caractéristiques temporelles de la mesure 1021. Le nouveau cluster 1060 est ensuite placée dans la deuxième liste de clusters 1020.

Après avoir réalisé toutes les étapes du procédé 100 pour toutes les mesures 1021 obtenues à l'instant t, chaque cluster 1011 donne des informations sur une cible comme par exemple sa position, sa vitesse ou encore ses caractéristiques d'émission. Par exemple, à chaque instant, la position de chaque cluster 1011 donne la position de chaque cible de l'environnement.

**Revendications**

1. Procédé (100) de traitement de mesures (1021) obtenues par un système antennaire à un indice de temps t donné, comportant les différentes étapes suivantes, réalisées par une unité de calcul d'un dispositif :

   • Au sein d'une première liste de clusters (1010), un cluster (1011) se définissant comme un ensemble de mesures comportant des caractéristiques temporelles (1012), des caractéristiques spatiales (1013) et des caractéristiques de signal (1014), un cluster (1011) étant créé à partir d'une première mesure et évoluant au fur et à mesure que de nouvelles mesures sont produites, prédire, à l'indice de temps t, les caractéristiques spatiales (1013) de chaque cluster (1011) contenu dans la première liste de clusters (1010) en fonction des caractéristiques spatiales (1013) du cluster (1011) à sa dernière mise à jour pour former une deuxième liste de clusters (1020, 101) ;
   • Pour chaque mesure (1021) :

      ◦ Former une troisième liste de clusters (1025) comprise dans la deuxième liste, chaque cluster (1011) comportant les caractéristiques spatiales prédites précédemment (102) ;
      ◦ Calculer un score de vraisemblance (1030) entre la mesure (1021) et chaque cluster (1011) de la troisième liste de clusters (1025, 103), le score de vraisemblance (1030) étant calculé à partir de deux facteurs, un premier facteur étant une distance entre la mesure (1021) et au moins une caractéristique spatiale du cluster (1011) et le deuxième facteur étant le résultat d'un traitement statistique des caractéristiques (1015) du cluster (1011).

   le procédé **caractérisé en ce qu'**il en plus comporte:

      ◦ Sélectionner le score de vraisemblance maximal (1040, 104).
      ◦ Comparer le score de vraisemblance maximal (1040) avec un seuil prédéterminé (1041, 105) :

         ▪ Si le score de vraisemblance maximal (1040) est au-dessus du seuil (1041), mettre à jour les caractéristiques (1015) de chaque cluster (1011) de la troisième liste de clusters (1025) pour former une quatrième liste de clusters (1050, 106) intégrant les informations de la mesure ;

- Sinon, créer un nouveau cluster (1060) à partir de la mesure (1021) et placer le nouveau cluster (1060) dans la deuxième liste de clusters (1020, 107).

2. Procédé selon la revendication 1, **caractérisé en ce que** chaque mesure (1021) présente des caractéristiques temporelles (1022), des caractéristiques spatiales (1023) et de caractéristiques de signal (1024) qui peuvent être choisies parmi au moins le groupe formé des caractéristiques suivantes :

- Pour les caractéristiques temporelles (1022) : une date ;
- Pour les caractéristiques spatiales (1023) : une position, une incertitude de position, et éventuellement une direction d'arrivée et un angle d'incertitude associé à la direction d'arrivée ;
- Pour les caractéristiques de signal (1024) : une fréquence centrale, une largeur de bande, une puissance, un rapport signal à bruit, une durée d'émission, un type de modulation, une polarisation et trois probabilités de mode de transmission correspondant à trois modes de transmission, bursté, continu et à évasion de fréquence.

3. Procédé selon l'une quelconque des revendications précédentes, **caractérisé en ce que** les caractéristiques (1015) d'un cluster (1011) peuvent être choisies parmi au moins le groupe formé des caractéristiques suivantes :

- Pour les caractéristiques temporelles (1012) : une date de première détection, une date de dernière mise à jour et un nombre de mesures ;
- Pour les caractéristiques spatiales (1013) : une position, une incertitude de position et éventuellement une direction d'arrivée ;
- Pour les caractéristiques de signal (1014) : une fréquence centrale, une largeur de bande, une puissance, un rapport signal à bruit, une durée d'émission, un type de modulation, une polarisation et trois probabilités de mode de transmission correspondant à trois modes de transmission, bursté, continu et à évasion de fréquence.

4. Procédé selon l'une quelconque des revendications précédentes, **caractérisé en ce que** le procédé (100) comporte une étape de formation de la première liste de clusters (1010) avant l'étape (101) de prédiction pour ne garder que chaque cluster (1011) d'une liste de clusters (1010) dont la position est dans une zone géographique proche définie à partir des positions des mesures (1021) ou de la connaissance de la position courant des antennes du système antennaire.

5. Procédé selon l'une quelconque des revendications précédentes, **caractérisé en ce que** l'étape (101) de prédiction des caractéristiques spatiales (1013) de chaque cluster (1011) de la première liste de clusters (1010) à l'indice de temps t est réalisée conformément à un schéma de prédiction de Kalman à partir des informations temporelles et spatiales du cluster.

6. Procédé selon l'une quelconque des revendications précédentes, **caractérisé en ce que** l'étape (102) de formation de la troisième liste de clusters (1025) comporte une première étape de filtrage pour ne garder que chaque cluster (1011) de la deuxième liste de clusters (1020) répondant à des conditions de filtrage de signal basées sur les caractéristiques de signal (1024) de la mesure (1021) et les caractéristiques de signal (1014) du cluster (1011).

7. Procédé selon l'une quelconque des revendications précédentes, **caractérisé en ce que** l'étape (102) de formation de la troisième liste de clusters (1025) comporte une deuxième étape de filtrage pour ne garder que chaque cluster (1011) de la deuxième liste de clusters (1025) répondant à une condition de filtrage spatiale basée sur les caractéristiques spatiales (1023) de la mesure (1021) et les caractéristiques spatiales (1013) du cluster (1011).

8. Procédé selon l'une quelconque des revendications précédentes, **caractérisé en ce que** pendant l'étape (105) de mise à jour, les caractéristiques de signal (1014) et les caractéristiques spatiales (1013) de chaque cluster (1011) de la troisième liste de clusters (1025) sont mises à jour à partir du score de vraisemblance normalisé (1030, 1031) du cluster (1011) associé à la mesure et au cluser (1011).

9. Dispositif permettant la mise en œuvre du procédé (100) selon l'une quelconque des revendications précédentes, **caractérisé en ce que** le dispositif comporte une unité de calcul configurée pour réaliser les étapes du procédé.

**Patentansprüche**

1. Verfahren (100) zur Verarbeitung von Messungen (1021), die von einem Antennensystem mit einem bestimmten Zeitindex t erhalten werden, umfassend die folgenden unterschiedlichen Schritte, die von einer Berechnungseinheit einer Vorrichtung realisiert werden:

- Innerhalb einer ersten Clusterliste (1010), in der ein Cluster (1011) als eine Gruppe von Messungen definiert wird, die zeitliche Merkmale (1012), räumliche Merkmale (1013) und Signalmerkmale (1014) umfasst, wobei ein Cluster (1011) ausgehend von einer ersten Messung erstellt wird und im Verlauf der Produktion von neuen Messungen weiterentwickelt wird, im Zeitindex t die räumlichen Merkmale (1013) jedes Clusters (1011), der in der ersten Clusterliste (1010) enthalten ist, in Abhängigkeit von den räumlichen Merkmalen (1013) des Clusters (1011) bei seiner letzten Aktualisierung voraussagen, um eine zweite Clusterliste (1020, 101) zu bilden;

• Für jede Messung (1021):

  ◦ eine dritte Clusterliste (1025) bilden, die in der zweiten Liste inbegriffen ist, wobei jeder Cluster (1011) die zuvor vorhergesagten räumlichen Cluster (102) umfasst;
  ◦ Berechnen eines Wahrscheinlichkeits-Scores (1030) zwischen der Messung (1021) und jedem Cluster (1011) der dritten Clusterliste (1025, 103), wobei der Wahrscheinlichkeits-Score (1030) ausgehend von zwei Faktoren berechnet wird, wobei ein erster Faktor eine Entfernung zwischen der Messung (1021) und wenigstens einem räumlichen Merkmale des Clusters (1011) ist und der zweite Faktor das Ergebnis einer statistischen Verarbeitung der Merkmale (1015) des Clusters (1011) ist;

wobei das Verfahren **dadurch gekennzeichnet ist, dass** es darüber hinaus umfasst:

  ◦ Auswählen des maximalen Wahrscheinlichkeits-Scores (1040, 104),
  ◦ Vergleichen des maximalen Wahrscheinlichkeits-Scores (1040) mit einem vorbestimmten Schwellenwert (1041, 105);

    ▪ Wenn der maximale Wahrscheinlichkeits-Score (1040) den Schwellenwert (1041) übersteigt, aktualisieren der Merkmale (1015) jedes Clusters (1011) der dritten Clusterliste (1025) zum Bilden einer vierten Clusterliste (1050, 106), die die Informationen der Messung übernimmt;
    ▪ Andernfalls erstellen eines neuen Clusters (1060) ausgehend von der Messung (1021) und einstellen des neuen Clusters (1060) in die zweite Clusterliste (1020, 107).

2. Verfahren gemäß Anspruch 1, **dadurch gekennzeichnet, dass** jede Messung (1021) zeitliche Merkmale (1022), räumliche Merkmale (1023) und Signalmerkmale (1024) aufweist, die aus wenigstens der Gruppe ausgewählt werden können, die aus den folgenden Merkmalen gebildet wird:

    - Bei den zeitlichen Merkmalen (1022): einem Datum;
    - Bei den räumlichen Merkmalen (1023): einer Position, einer Positionsunsicherheit und eventuell einer Ankunftsrichtung und einem der Ankunftsrichtung zugeordneten Unsicherheitswinkel;
    - Bei den Signalmerkmalen (1024): eine zentrale Frequenz, eine Bandbreite, eine Leistung, ein Geräusch- / Signalverhältnis, eine Sendedauer, einen Modulationstyp, eine Polarisation und drei Wahrscheinlichkeiten eines Übertragungsmodus, der drei Übertragungsmodi entspricht - geplatzt, kontinuierlich und mit Frequenzflucht.

3. Verfahren gemäß irgendeinem der voranstehenden Ansprüche, **dadurch gekennzeichnet, dass** die Merkmale (1015) eines Clusters (1011) ausgewählt werden können aus wenigstens der Gruppe, die aus den folgenden Merkmalen ausgewählt wird:

    - Bei den zeitlichen Merkmalen (1012): einem Datum der ersten Erkennung, einem Datum der letzten Aktualisierung und einer Anzahl von Messungen;
    - Bei den räumlichen Merkmalen (1013): einer Position, einer Positionsunsicherheit und eventuell einer Ankunftsrichtung;
    - Bei den Signalmerkmalen (1014); einer zentralen Frequenz, einer Bandbreite, einer Leistung, einem Geräusch- / Signalverhältnis, einer Sendedauer, einem Modulationstyp, einer Polarisierung und drei Wahrscheinlichkeiten eines Übertragungsmodus, der drei Übertragungsmodi entspricht - geplatzt, kontinuierlich und mit Frequenzflucht.

4. Verfahren gemäß irgendeinem der voranstehenden Ansprüche, **dadurch gekennzeichnet, dass** das Verfahren (100) einen Bildungsschritt der ersten Clusterliste (1010) vor dem Vorhersageschritt (101) umfasst, um nur jeden Cluster (1011) einer Clusterliste (1010) zu behalten, dessen Position in einer nahen geographischen Zone ist, die ausgehend von den Positionen der Messungen (1021) oder der Kenntnis der laufenden Position der Antennen des Antennensystems definiert wird.

5. Verfahren gemäß irgendeinem der voranstehenden Ansprüche, **dadurch gekennzeichnet, dass** der Vorhersageschritt (101) der räumlichen Merkmale (1013) jedes Clusters (1011) der ersten Clusterliste (1010) mit Zeitindex t gemäß einem Vorhersageschema nach Kalman ausgehend von den zeitlichen und räumlichen Informationen des Clusters realisiert ist.

**6.** Verfahren gemäß irgendeinem der voranstehenden Ansprüche, **dadurch gekennzeichnet, dass** der Bildungsschritt (102) der dritten Clusterliste (1025) einen ersten Filterungsschritt umfasst, um nur jeden Cluster (1011) der zweiten Clusterliste (1020) zu behalten, der den Signalfilterungs-Bedingungen genügt, die auf den Signalmerkmalen (1024) der Messung (1021) und den Signalmerkmalen (1014) des Clusters (1011) basiert.

**7.** Verfahren gemäß irgendeinem der voranstehenden Ansprüche, **dadurch gekennzeichnet, dass** der Bildungsschritt (102) der dritten Clusterliste (1025) einen zweiten Filterschritt umfasst, um nur jeden Cluster (1011) der zweiten Clusterliste (1025) zu behalten, der einer räumlichen Filterungsbedingung genügt, die auf den räumlichen Merkmalen (1023) der Messung (1021) und den räumlichen Merkmalen (1013) des Clusters (1011) basiert.

**8.** Verfahren gemäß irgendeinem der voranstehenden Ansprüche, **dadurch gekennzeichnet, dass** die Signalmerkmale (1014) und die räumlichen Merkmale (1013) jedes Clusters (1011) der dritten Clusterliste (1025) während des Aktualisierungsschritts (105) ausgehend von der normalisierten Wahrscheinlichkeits-Score (1030, 1031) des Clusters (1011) aktualisiert werden, der der Messung und dem Cluster (1011) zugeordnet wird.

**9.** Vorrichtung, die das Umsetzen des Verfahrens (100) gemäß irgendeinem der voranstehenden Ansprüche erlaubt, **dadurch gekennzeichnet, dass** die Vorrichtung eine Berechnungseinheit umfasst, die zum Realisieren der Schritte des Verfahrens ausgestaltet ist.

**Claims**

**1.** Method (100) for processing measurements (1021) obtained by an antenna system at a given time index t, including the following different steps, carried out by a calculating unit of a device:

• Within a first list of clusters (1010), a cluster (1011) being defined as a set of measurements including temporal characteristics (1012), spatial characteristics (1013) and signal characteristics (1014), a cluster (1011) being created from a first measurement and changing as new measurements are produced, predicting, at the time index t, the spatial characteristics (1013) of each cluster (1011) contained in the first list of clusters (1010) according to the spatial characteristics (1013) of the cluster (1011) at its latest update to form a second list of clusters (1020, 101);
• For each measurement (1021):

◦ Forming a third list of clusters (1025) comprised in the second list, each cluster (1011) including the spatial characteristics predicted hereinabove (102);
◦ Calculating a likelihood score (1030) between the measurement (1021) and each cluster (1011) of the third list of clusters (1025, 103), the likelihood score (1030) being calculated from two factors, a first factor being a distance between the measurement (1021) and at least one spatial characteristic of the cluster (1011) and the second factor being the result of a statistical treatment of the characteristics (1015) of the cluster (1011).

the method **characterised in that** it further includes:

◦ Selecting the maximum likelihood score (1040, 104).
◦ Comparing the maximum likelihood score (1040) with a predetermined threshold (1041, 105):

■ If the maximum likelihood score (1040) is above the threshold (1041), updating the characteristics (1015) of each cluster (1011) of the third list of clusters (1025) to form a fourth list of clusters (1050, 106) integrating the information from the measurement;
■ Otherwise, creating a new cluster (1060) from the measurement (1021) and placing the new cluster (1060) in the second list of clusters (1020, 107).

**2.** Method according to claim 1, **characterised in that** each measurement (1021) has temporal characteristics (1022), spatial characteristics (1023) and signal characteristics (1024) that can be chosen from at least the group formed from the following characteristics:

- For the temporal characteristics (1022): a date;
- For the spatial characteristics (1023): a position, a position uncertainty, and optionally a direction of arrival and an angle of uncertainty associated with the direction of arrival;
- For the signal characteristics (1024): a central frequency, a bandwidth, a power, a signal-to-noise ratio, an emission duration, a modulation type, a polarisation and three transmission mode probabilities corresponding to three transmission modes, burst, continuous and frequency hopping.

**3.** Method according to any preceding claim, **charac-**

**terised in that** the characteristics (1015) of a cluster (1011) can be chosen from at least the group formed from the following characteristics:

- For the temporal characteristics (1012): a first detection date, a latest update date and a number of measurements;
- For the spatial characteristics (1013): a position, a position uncertainty and optionally a direction of arrival;
- For the signal characteristics (1014): a central frequency, a bandwidth, a power, a signal-to-noise ratio, an emission duration, a modulation type, a polarisation and three transmission mode probabilities corresponding to three transmission modes, burst, continuous and frequency hopping.

4. Method according to any preceding claim, **characterised in that** the method (100) includes a step of forming the first list of clusters (1010) before the step (101) of predicting in order to retain only each cluster (1011) from a list of clusters (1010) of which the position is in a close geographical area defined from positions of measurements (1021) or from the knowledge of the current position of the antennas of the antenna system.

5. Method according to any preceding claim, **characterised in that** the step (101) of predicting the spatial characteristics (1013) of each cluster (1011) of the first list of clusters (1010) at the time index t is carried out in accordance with a Kalman prediction schema from the temporal and spatial information of the cluster.

6. Method according to any preceding claim, **characterised in that** the step (102) of forming the third list of clusters (1025) includes a first step of filtering in order to retain only each cluster (1011) of the second list of clusters (1020) that satisfy signal filtering conditions based on the signal characteristics (1024) of the measurement (1021) and the signal characteristics (1014) of the cluster (1011).

7. Method according to any preceding claim, **characterised in that** step (102) of forming the third list of clusters (1025) includes a second step of filtering in order to retain only each cluster (1011) of the second list of clusters (1025) that satisfy a spatial filtering condition based on the spatial characteristics (1023) of the measurement (1021) and the spatial characteristics (1013) of the cluster (1011).

8. Method according to any preceding claim, **characterised in that** during the step (105) of updating, the signal characteristics (1014) and the spatial characteristics (1013) of each cluster (1011) of the third list of clusters (1025) are updating from the standardised likelihood score (1030, 1031) of the cluster (1011) associated with the measurement and with the cluster (1011).

9. Device allowing for the implementing of the method (100) according to any preceding claim, **characterised in that** the device includes a calculating unit configured to carry out the steps of the method.

Fig.1

Fig.2

Fig.3

Fig.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. MUSICKI.** *Multi-target tracking in clutter without measurement assignment,* 14 Décembre 2004